# EUROPEAN PATENT SPECIFICATION

(11) **EP 3 092 386 B1**
(45) Date of publication and mention of the grant of the patent: **04.11.2020**
(21) Application number: 14820919.0
(22) Date of filing: 16.12.2014
(51) Int. Cl.: F02B 39/10, F02D 41/00, F02D 41/24, F02D 41/20, F02B 33/40, F02B 39/16, H02P 6/08, H02P 25/08, H02P 29/032

(54) **CONTROL OF A MOTOR IN AN ELECTRIC SUPERCHARGER**
STEUERUNG EINES MOTORS IN EINEM ELEKTRISCHEN LADER
COMMANDE D'UN MOTEUR DANS UN COMPRESSEUR ÉLECTRIQUE

(30) Priority: 27.12.2013 GB 201323071
(43) Date of publication of application: 16.11.2016
(73) Proprietor: Valeo Air Management UK Limited, Redditch, Worcestershire B98 0DZ (GB)
(72) Inventor: WEBSTER, Matthew Nicholas, Basildon Essex SS14 3WN (GB)
(74) Representative: Garcia, Christine
(86) International application number: PCT/GB2014/053708
(87) International publication number: WO 2015/097438

(56) References cited:
- EP-A1- 1 300 559
- WO-A1-02/10565
- WO-A1-2012/103431
- DE-A1-102008 060 646
- DE-A1-102011 086 360
- FR-A1- 2 885 388
- Qianfan Zhang ET AL: "Hybrid Switched Reluctance Motor and Drives Applied on a Hybrid Electric Car", , 12 October 2011 (2011-10-12), pages 215-233, XP055171618, DOI: 10.5772/17799 ISBN: 978-9-53-307477-1 Retrieved from the Internet: URL:http://cdn.intechopen.com/pdfs-wm/1958 0.pdf [retrieved on 2015-02-24]

## Description

### Technical Field

The present invention relates to control of motors and more particularly to control of a motor in an electric superchargers.

### Background of the Invention

Electric superchargers are becoming increasingly attractive for use with internal combustion (IC) engines in the automotive industry. Firstly, they enable lower fuel consumption in the IC compared to conventional (direct engine-driven) superchargers and thus reduce carbon dioxide emissions. They also tend to be able to be more responsive and may be able to attain higher speeds than direct engine-driven superchargers.

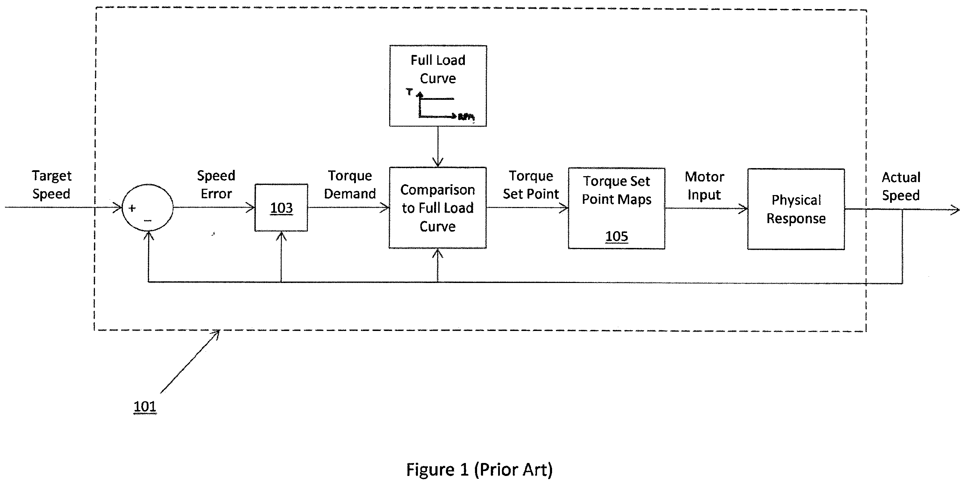

Using a switched-reluctance motor in an electric supercharger (to drive the compressor element) has been found to be particularly beneficial. A previously-suggested control system for controlling the speed of a switched-reluctance motor in an electric supercharger is illustrated in Figure 1.

Referring to Figure 1, the control system 101 receives an input, setting the target speed of the motor in the supercharger. This target speed is determined by a control system for the engine, the details of which are not relevant for the purposes of this patent specification. The target speed is compared to the actual speed input of the motor, to produce a speed error.

The speed error is received by a proportional integral (PI) controller 103. PI controller 103 then determines the appropriate torque for changing the speed of the motor from its actual speed towards the target speed. The torque determined by the PI controller is referred to as the "torque demand".

In some circumstances it is desirable to limit the maximum value of the torque applied by the motor. For example it might be desirable to prevent damage to the windings or to electronics in the motor that might otherwise be caused if the torque demand is too high (high torque may result in excessive currents in the electronics and/or windings). Accordingly, the control system 1 compares the magnitude of the torque demand to a torque cap. If the magnitude of the torque demand is greater than the torque cap, the torque demand is reduced to the value of the cap. The torque, once checked against the maximum torque cap, is re-labelled and is referred to as the "torque set point". If the magnitude of the torque demand is less than the torque cap, the magnitude of the torque demand remains unchanged (but it is nonetheless re-labelled as the torque set point).

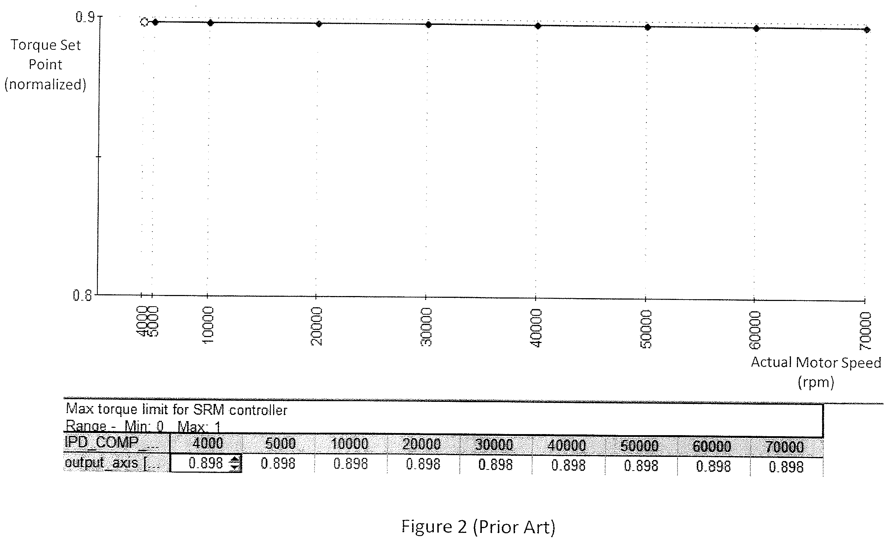

The behaviour of the torque cap is often referred to as a "full-load curve". Figure 2 shows a full-load curve of the control system of Figure 1. The vertical axis shows the torque set point and the horizontal axis shows the actual speed of the motor. In this case, the torque cap is based on a torque that has been normalised against the maximum possible torque of the motor at that particular speed; the torque set point values are therefore from 0 to 1. As evident from Figure 2, the full-load curve is a constant (torque set point = 0.898) across all speeds of the motor. This is the torque above which the efficiency of the motor has been found to notably decrease and the current starts to approach potentially damaging levels. It is therefore the torque above which the supercharger is not permitted to operate because of safety and/or excessive losses. Therefore, if at any point, the torque demand in the control system of Figure 1 is greater than 0.898, it will automatically be reduced to 0.898.

Four different control variables of the input current (ON angle, OFF angle, Freewheel and Pulse Width Modulation (PWM)) govern the torque generated by the switched-reluctance motor. Torque set point maps 105 are used to obtain the input values of each control variable required to achieve a particular torque set point. A torque set point map 105 exists for each of the control variables (i.e. there are four torque set point maps in total). Each map is populated with values of the control variable for all torque set points and all motor speeds (the latter being normalised by a comparison of the supply voltage with a reference voltage, thereby taking into account any variation in supply voltage). The values of each control variable are predetermined for the particular supercharger motor and are hard-wired into the map.

Once the control system has obtained the value of the required variable(s), the current is supplied to the motor. This motor input gives rise to a physical response, creating a new actual speed. This actual speed is fed back into the control system and compared to the target speed, and the above-mentioned steps are repeated.

Electric superchargers tend to operate at high speeds (e.g. 50,000+ rpm). When the motor needs to accelerate quickly, the torque set point is often limited by the full load curve (i.e. capped at the maximum torque cap).

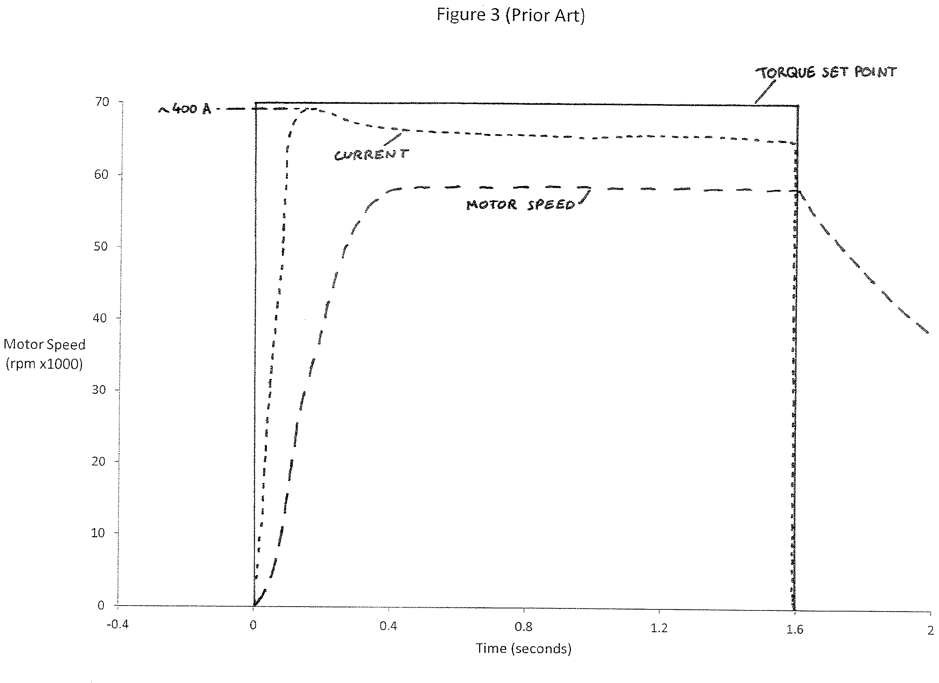

Figure 3 is a graph showing variation in torque set point, motor speed and electrical current as the supercharger motor controlled by the control system of Figure 1 is accelerated from 5000rpm to a target speed of 70000 rpm (in reality the motor can only reach a maximum actual speed of 58000rpm). The torque demand for such an operation is always above the full load curve. Therefore, the torque set point matches the max torque cap (constant for all speeds) during the whole time current is supplied (0 - 1.6 seconds).

When operating in this manner, the torque will always be the maximum deemed safely possible (i.e. above which there is a significant risk of damage to the motor, and above which the efficiency drops off). This means the current drawn will also always be the maximum deemed safely possible. This inflexibility in the current being drawn, and therefore power consumption, is undesirable. For example when the battery is running low, it may be undesirable to consume large amounts of power. Furthermore, a prolonged current at this maximum level could still potentially cause some damage to the supercharger.

An alternative control system has been suggested. In this alternative arrangement (not shown) the control system reduces a *speed* set point (effectively incrementally increasing the target speed rather than having the target speed as the final target speed). This smoothes out an otherwise sudden increase in torque demand and therefore avoids drawing a large current suddenly and for a prolonged period. However, the power is used in a sub-optimal manner, and the supercharger tends to have a relatively slow response time.

EP1300559A1 discloses an electronically driven pressure boosting system that is used to boost the torque output of an internal combustion engine. An electronic control system determines one or more allowable operating limits to the operation of a pressure charging device based on the state of the electrical supply system, and drives the pressure charging device using the engine-driven battery recharger when the state of the electrical supply system is within an acceptable range. The engine control system isolates at least partially the battery from the engine-driven battery recharger and drives the pressure charging device using the battery when the state of the electrical supply system is not within an acceptable range.

WO2012/103431A1 discloses a variable speed compressor system incorporating an electric power generation capability by combining a variable-speed compressor assembly with an electric motor assembly via a drive subassembly in a compact unit regulated by a control system. The control system facilitates fully controllable boost-on-demand forced-air induction operation across an entire engine speed range and offers intelligent electric power generation.

FR2885388A1 discloses a method of controlling an electrical compressor based on a set point corresponding to an airflow permitting complete burning of the fuel flow to the engine.

### Summary of the Invention

The present invention seeks to mitigate or overcome at least some of the above-mentioned disadvantages.

According to a first aspect of the invention, there is provided a method of controlling a motor in an electric supercharger when changing the speed of the motor from an actual speed to a target speed, the method comprising the steps of repeatedly:
(i) determining the magnitude of a torque input required to change the speed of the motor from the actual speed towards the target speed,
(ii) imposing a torque cap on the torque input required, thereby establishing a torque set point, and
(iii) supplying electrical current to the motor dependent on said torque set point;
characterised in that
the torque cap is based on an torque cap behaviour previously selected from a plurality of different torque cap behaviours. For each torque cap behaviour: the magnitude of the torque cap varies as a function of the speed of the motor, and the variation in magnitude of the torque cap is predetermined such that the current drawn by the motor is kept at a respective predetermined threshold. The method comprises the further steps of receiving an input from an engine management system and selecting the torque cap behaviour from the plurality of torque cap behaviours based on the input from the engine management system.

The present invention recognises that the torque cap behaviour (i.e. full load curve) can be designed such that the current drawn by the motor remains as close as possible to a particular threshold at all times. This is achieved by varying the magnitude of the torque cap as a function of the speed of the motor. The full load curve can thus be tailored to ensure that the current drawn by the motor stays at a predetermined amount (threshold), ensuring a more predictable power consumption. It also enables a more efficient use of the power, and a quicker response, than the previously-suggested arrangement in which the speed set point is varied.

The threshold is preferably a constant threshold. The motor may have a maximum torque at which the motor can safely operate (for example the torque above which the efficiency of the motor has been found to notably decrease and the current starts to approach potentially damaging levels). The motor may have a maximum current deemed safely possible (for example the current drawn when generating the maximum torque at which the motor can safely operate). The threshold is preferably at less than the maximum current deemed safely possible. The threshold may be at 80% or less than the maximum current deemed safely possible. The threshold may be at 60% or less than the maximum current deemed safely possible. The predetermined threshold may be a pre-selected threshold. The method may comprise the step of pre-selecting the threshold. The variation in the magnitude of the torque cap may be predesigned (such that the current drawn by the motor is kept at the predetermined threshold). The method may comprise the step of pre-designing the variation in the magnitude of the torque cap.

A plurality of torque cap behaviours (i.e. full load curves) is provided, each being arranged to ensure that the current drawn in reaching the target speed is kept at a respective threshold. In this manner, different full load curves can be used depending on the circumstances (for example the power available, required responsiveness etc.) It is also thought to be useful to have a variety of full load curves available during product development and testing of the supercharger because it enables the supercharger to be more easily tested in conjunction with other components (e.g. an automotive manufacturer may wish to try lowering the power consumption of the supercharger to see if this trade-off would have benefits elsewhere (e.g. in battery life or the ability to run other components from the battery)).

The method comprises the step of selecting the torque cap behaviour from the plurality of torque cap behaviours. Thus, the control system itself may select the torque cap behaviour. For example, the control system may receive an input from the engine management system from which the control system determines which torque cap behaviour to select.

In other embodiments of the invention, the method may comprise the step of receiving the torque cap behaviour selected from the plurality of torque cap behaviours. Thus, the control system may be supplied with the particular torque cap behaviour to use. For example the selection of the torque cap behaviour may take place outside the control system, and the selected torque cap behaviour may be received by the control system. The torque cap behaviour may, for example, be selected by a user (for example if the user wishes to operate in 'sport' mode, or 'economy' mode, torque cap behaviours with respectively higher and lower current thresholds may be selected). The torque cap behaviour may, for example, be selected by the engine management system (for example if the engine management system detects a low battery, it may select a behaviour with a lower current threshold).

The present invention seeks to provide a more predictable power consumption by the supercharger motor. This enables the power consumption to be tailored to particular circumstances. The torque cap behaviour may be selected in dependence on the amount of power available in a power source. The power source is preferably the power source for powering the motor. The power source, may, for example be a battery or ultracapacitor.

In a preferred embodiment, the motor is a switched-reluctance motor.

The value of at least one control characteristic of the electrical current may be supplied to the motor is determined from a torque set point map. The torque set point map typically contains predetermined values of the control characteristic for each value of torque set point and actual speed. The value may be obtained directly from the map. In some embodiments it may be interpolated between two or more adjacent values in the map.

The at least one control characteristic of the electrical current may be the ON angle. The value of a plurality of control characteristics of the electrical current (for example, OFF angle, Freewheel Pulse Width Modulation (PWM)) may be determined from a plurality of respective torque set point maps.

According to another aspect of the invention, there is provided a control system for controlling a motor in an electric supercharger when changing the speed of the motor from an actual speed to a target speed, the system comprising:
a memory module comprising an torque cap behaviour,
a processor arranged to apply the torque cap behaviour to impose an torque cap on the torque required to change the speed of the motor from the actual speed towards the target speed;
characterised in that the electric supercharger control system comprises a library containing a plurality of different torque cap behaviours. For each torque cap behaviour: the magnitude of the torque cap varies as a function of the speed of the motor, and the variation in magnitude of the torque cap is predetermined such that the current drawn by the motor is kept at a respective predetermined threshold. The control system is configured to select a torque cap behaviour from the plurality of torque cap behaviours based on an input from the engine management system. Thus, the control system can access a plurality of different torque cap behaviours as required.

According to another aspect of the invention, there is provided an electric supercharger in combination with a control system according to any aspect of the invention herein. The supercharger may be arranged to supply an internal combustion engine with a compressed charge. The engine is preferably for use in an automobile. The engine is preferably a relatively small capacity engine. The engine is preferably 4 litres or less, more preferably 3 litres or less, and yet more preferably 2 litres or less). The engine may be in an automobile. The automobile may be less than 3.5 tonnes, and more preferably less than 2 tonnes.

The torque cap behaviours may be determined empirically.

It will be appreciated that any features described with reference to one aspect of the invention are equally applicable to any other aspect of the invention, and vice versa. For example any features described with reference to the method of controlling a motor according to the first aspect of the invention may be equally applicable to the method of controlling a motor according to another aspect of the invention.

### Description of the Drawings

Embodiments of the invention will now be described, by way of example only, with reference to the accompanying schematic drawings of which:
Figure 1 is a schematic showing a previously-suggested control system;
Figure 2 shows the full-load curve applied in the control system of Figure 1;
Figure 3 shows the torque set point, current and motor speed during use of a supercharger controlled by the system of Figure 1;
Figure 4 is a schematic showing a control system according to a first embodiment of the invention;
Figure 5 shows one of the full-load curves applied in the control system of Figure 4; and
Figure 6 shows the torque set point, current and motor speed during use of a supercharger controlled by the system of Figure 4.

### Detailed Description

As described in the introduction to this specification, in the previously-suggested control system of Figure 1, a control system 101 compares the magnitude of the torque demand to a torque cap. The torque cap in the control system of Figure 1 is a constant (normalised torque = 0.898) across all speeds of the motor. This is the torque above which the efficiency of the motor notably decreases and the current starts to approach potentially damaging levels. It is therefore the torque above which the supercharger is not permitted to operate. Therefore, if at any point, the torque demand in the control system of Figure 1 is greater than 0.898, it will automatically be reduced to 0.898.

As shown in Figure 3, when the motor accelerates, the torque set point matches the torque cap during the whole time the current is supplied (0 to 1.6 seconds).

When operating in this manner, the torque will always be the maximum deemed safely possible. This means the current drawn will also be the maximum deemed safely possible. This inflexibility in current use, and therefore power consumption, is undesirable. For example when the battery is running low, it may be undesirable to consume the maximum amount of power.

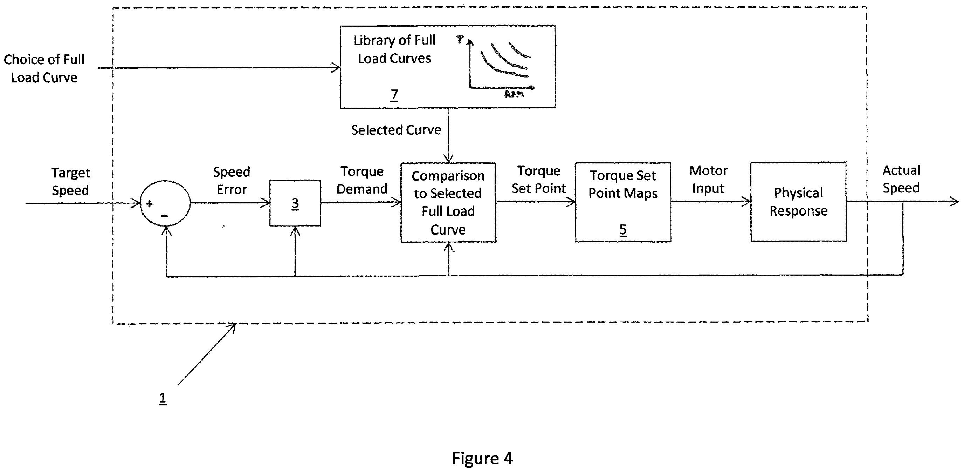

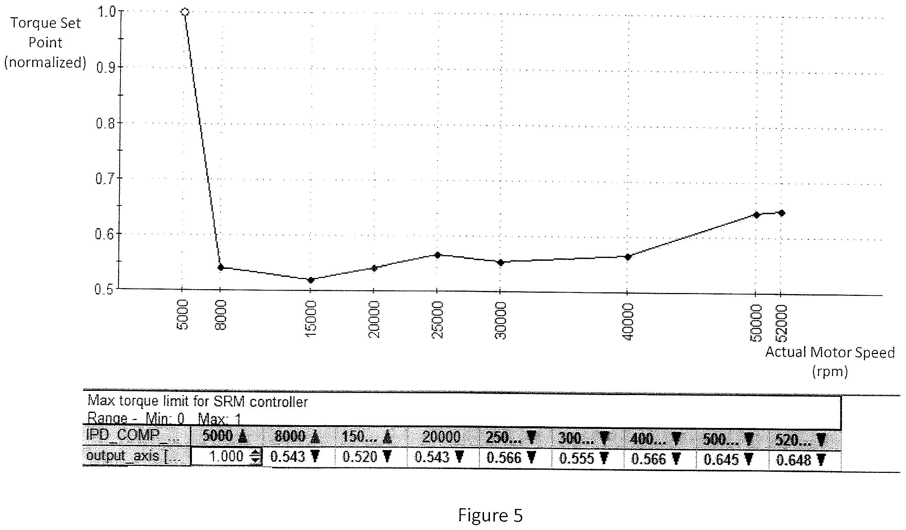

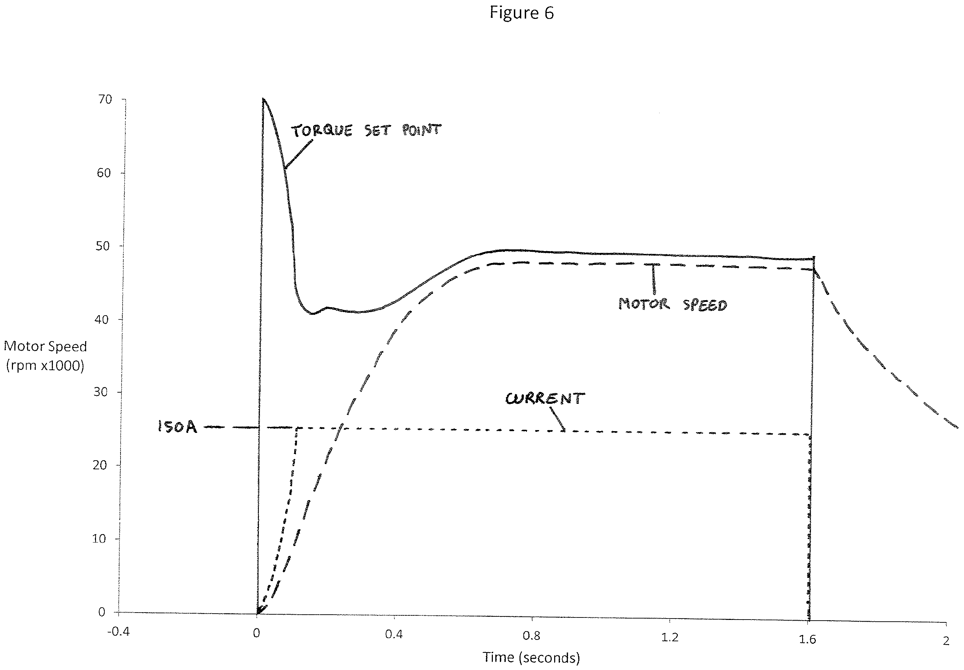

Figure 4 is a schematic of a control system 1 according to a first aspect of the invention. The control system 1 is similar to that shown in Figure 1 except that it includes a library 7 containing three different torque cap behaviours (full-load curves). Furthermore for each of those full-load curves, the magnitude of the torque cap varies as a function of the speed of the motor. These new features are especially beneficial, as will be apparent from the description below with reference to Figures 5 and 6:

Figure 5 shows one of the full-load curves in the library. In contrast to the full-load curve in Figure 2, the magnitude of the torque cap (vertical axis) varies with the speed of the motor (horizontal axis). The torque cap is normalised against the maximum torque it is possible to generate, and therefore the vertical axis scales from 0 to 1. This variation in the torque cap was determined empirically in a separate process. This process is described in the paragraph below:

In a test rig, a supercharger was repeatedly run at 5000rpm and accelerated towards 70000rpm. The magnitude of the torque cap was incrementally decreased until the current drawn during a first speed increment (i.e. 5000 to 12000rpm) was below a threshold (150 Amps in this case). The magnitude of the torque cap was then adjusted until the current drawn during a second speed increment (8000 to 17500rpm) was also below this 150 Amp threshold. This process was repeated for other speed increments (15000 to 25000 rpm, etc.), thereby establishing a series of torque caps, each for a certain speed within each speed increment. These caps are shown as data points in Figure 5. The torque caps were used to create a torque cap behaviour (full-load curve) that varies over the range of speeds. The torque cap behaviour is created from a linear interpolation between the data points. If, during testing, it was found that the current exceeded the 150 Amp threshold at certain speeds, an additional speed increment was tested around that speed, and a new data point inserted. This ensured the torque cap behaviour kept the current below 150 Amps at most, if not all, speeds despite using a relatively basic interpolation method.

The above-described process was repeated for two other magnitudes of current threshold. The full-load curves for each of these thresholds are the other two curves in the library 7.

Having a plurality of full-load curves, each designed to ensure a different threshold of current drawn by the motor, gives rise to certain advantages:
Firstly, this means that different torque cap behaviours can be used depending on the circumstances. By way of illustration, in the control system of Figure 4, an engine management system (not shown) is monitoring the power available in the car battery which powers the supercharger. If it detects the battery is well-charged (e.g. 80% charged or above), it tells the control system to select the full-load curve corresponding to the highest current use. This is because the engine management system has established that there is sufficient power available. In contrast, if it detects the battery is running low (e.g. below 50% charged), it tells the control system to select the full-load curve corresponding to the lowest current use. This is because the engine management system has established that it needs to restrict the power consumption of the supercharger to avoid the battery running flat.
The second advantage of this system is that it ensures there is a predictable magnitude of current usage by the supercharger. If the full-load curve based on a current threshold of 150 Amps is selected, then the engine management system knows that only a maximum current of 150 Amps will be drawn. In contrast, in the system of Figure 1 the current drawn will always be the maximum safely possible (around 400 Amps), which may not be desirable in some circumstances.

Figure 6 is a graph showing variation in torque set point (normalised), motor speed and electrical current as the supercharger motor controlled by the control system of Figure 4 is accelerated from 5000rpm to a target speed of 70000 rpm (in reality the motor can only reach a maximum actual speed of 48000rpm). The control system is using the full-load curve shown in Figure 5.

As shown in Figure 6, the torque demand is limited to a torque set point in accordance with the full-load curve of Figure 5. Accordingly, the current rapidly reaches the threshold of 150 Amps and then remains at this value as the motor accelerates (for clarity, the current signal is smoothed; in reality, there is some noise/variation from this smoothed signal). Since the current threshold is below the magnitude of the currents experienced in the system of Figure 1, the maximum speed attained by the motor is lower, and the responsiveness slightly slower. However, these disadvantages are offset by the predictability of the current use, and in the flexibility of having a plurality of load curves available.

In a further embodiment of the invention (not shown), the control system selects a full load curve from a plurality of different full load curves. In this embodiment however, the full-load curves are all constant (independent of motor speed) but each full-load curve is a different magnitude of constant. The full-load curve with the highest torque cap is the torque at which the motor can safely operate, and there are two other load curves set at 80% and 60% of this value, thereby ensuring each has lower power consumption. The current drawn with these full-load curves is not specifically predetermined (as it is in the first embodiment), but this embodiment still enables an approximate level of power consumption to be predicted, and the choice of full-load curve can be selected accordingly.

A further embodiment (not shown) is the same as the first embodiment except that the control system selects the full-load curve based on the physical condition of the supercharger. In this embodiment the full-load curve with the highest current threshold is used until the reliability of the electronics in the supercharger becomes marginal (which may occur for example if they become too hot). At this point (in response to a warning signal from the supercharger) the control system selects a full-load curve with a lower threshold.

## Claims

1. A method of controlling an electric supercharger comprising a motor, when changing the speed of the motor from an actual speed to a target speed, the method comprising the steps of repeatedly:
(i) determining the magnitude of a torque input required to change the speed of the motor from the actual speed towards the target speed,
(ii) imposing a torque cap on the torque input required, thereby establishing a torque set point, and
(iii) supplying electrical current to the motor dependent on said torque set point;
**characterised in that**
the torque cap is based on a torque cap behaviour selected from a plurality of different torque cap behaviours, wherein for each torque cap behaviour: the magnitude of the torque cap varies as a function of the speed of the motor, and the variation in magnitude of the torque cap is predetermined such that the current drawn by the motor is kept at a respective threshold, and
wherein the method comprises the further steps of:
receiving an input from an engine management system, and
selecting the torque cap behaviour from the plurality of torque cap behaviours based on the input from the engine management system.

2. A method according to claim 1, comprising the step of receiving the torque cap behaviour selected from the plurality of torque cap behaviours.

3. A method according to claim 1 or 2, wherein the torque cap behaviour is selected in dependence on the amount of power available in a power source.

4. A method according to any preceding claim, wherein the motor is a switched-reluctance motor.

5. A method according to claim 4, wherein the value of at least one control characteristic of the electrical current supplied to the motor is determined from a torque set point map.

6. A method according to claim 5, wherein the at least one control characteristic of the electrical current is the ON angle.

7. An electric supercharger control system configured to control a motor in an electric supercharger when changing the speed of the motor from an actual speed to a target speed, the system comprising:
a memory module comprising a torque cap behaviour,
a processor arranged to apply the torque cap behaviour to impose a torque cap on the torque required to change the speed of the motor from the actual speed towards the target speed;
**characterised in that** the electric supercharger control system comprises a library containing a plurality of different torque cap behaviours, wherein for each torque cap behaviour:
the magnitude of the torque cap varies as a function of the speed of the motor, and the variation in magnitude of the torque cap is predetermined such that the current drawn by the motor is kept at a respective threshold, and
wherein the control system is configured to select a torque cap behaviour from the plurality of torque cap behaviours based on an input from the engine management system.

8. An electric supercharger in combination with the electric supercharger control system of claim 7.

## Patentansprüche

1. Verfahren zum Steuern eines einen Motor umfassenden elektrischen Laders beim Ändern der Drehzahl des Motors von einer Ist-Drehzahl auf eine Soll-Drehzahl, wobei das Verfahren die folgenden wiederholten Schritte umfasst:
(i) Bestimmen der Größe eines Drehmomenteingangs, der erforderlich ist, um die Drehzahl des Motors von der Ist-Drehzahl auf die Soll-Drehzahl zu ändern,
(ii) Auferlegen eines Drehmomentmaximums auf den erforderlichen Drehmomenteingang und dadurch Festlegen eines Drehmoment-Sollwerts und
(iii) Zuführen von elektrischem Strom zum Motor in Abhängigkeit von dem Drehmoment-Sollwert;
**dadurch gekennzeichnet, dass**
das Drehmomentmaximum auf einem Drehmomentmaximumverhalten basiert, das aus mehreren verschiedenen Drehmomentmaximumverhaltensweisen ausgewählt ist, wobei für jedes Drehmomentmaximumverhalten: die Größe des Drehmomentmaximums in Abhängigkeit von der Drehzahl des Motors variiert und die Variation der Größe des Drehmomentmaximums so vorbestimmt ist, dass der vom Motor gezogene Strom auf einem jeweiligen Schwellenwert gehalten wird, und
wobei das Verfahren die folgenden weiteren Schritte umfasst:
Empfangen einer Eingabe von einem Motormanagementsystem und
Auswählen des Drehmomentmaximumverhaltens aus der Vielzahl von Drehmomentmaximumverhaltensweisen basierend auf der Eingabe vom Motormanagementsystem.

2. Verfahren nach Anspruch 1, umfassend den Schritt des Empfangens des aus der Vielzahl von Drehmomentmaximumverhaltensweisen ausgewählten Drehmomentmaximumverhaltens.

3. Verfahren nach Anspruch 1 oder 2, wobei das Drehmomentmaximumverhalten in Abhängigkeit von der in einer Stromquelle verfügbaren Energiemenge ausgewählt wird.

4. Verfahren nach einem der vorangehenden Ansprüche, wobei der Motor ein geschalteter Reluktanzmotor ist.

5. Verfahren nach Anspruch 4, wobei der Wert zumindest einer Steuerkenngröße des dem Motor zugeführten elektrischen Stroms aus einer Drehmoment-Sollwertkarte bestimmt wird.

6. Verfahren nach Anspruch 5, wobei die zumindest eine Steuerkenngröße des elektrischen Stroms der Einschaltwinkel ist.

7. Steuersystem für einen elektrischen Lader, das dazu konfiguriert ist, einen Motor in einem elektrischen Lader beim Ändern der Drehzahl des Motors von einer Ist-Drehzahl auf eine Soll-Drehzahl zu steuern, wobei das System Folgendes umfasst:
ein Speichermodul, das ein Drehmomentmaximumverhalten umfasst,
einen Prozessor, der dazu angeordnet ist, das Drehmomentmaximumverhalten anzuwenden, um dem Drehmoment ein Drehmomentmaximum aufzuerlegen, das erforderlich ist, um die Drehzahl des Motors von der Ist-Drehzahl auf die Soll-Drehzahl zu ändern;
**dadurch gekennzeichnet, dass** das Steuersystem für den elektrischen Lader eine Bibliothek umfasst, die mehrere verschiedene Drehmomentmaximumverhaltensweisen enthält, wobei für jedes Drehmomentmaximumverhalten:
die Größe des Drehmomentmaximums in Abhängigkeit von der Drehzahl des Motors variiert und die Variation der Größe des Drehmomentmaximums so vorbestimmt ist, dass der durch den Motor gezogene Strom auf einem jeweiligen Schwellenwert gehalten wird, und
wobei das Steuersystem dazu konfiguriert ist, ein Drehmomentmaximumverhalten aus der Vielzahl von Drehmomentmaximumverhaltensweisen basierend auf einer Eingabe vom Motormanagementsystem auszuwählen.

8. Elektrischer Lader in Kombination mit dem Steuersystem für einen elektrischen Lader nach Anspruch 7.

## Revendications

1. Méthode de contrôle d'un compresseur électrique comprenant un moteur, lors du changement de la vitesse du moteur 'une vitesse réelle à une vitesse cible, le procédé comprenant les étapes de façon répétée:
(i) déterminer l'amplitude d'une entrée de couple nécessaire pour changer la vitesse du moteur de la vitesse réelle vers la vitesse cible,
(ii) imposer un plafond de couple à l'entrée de couple requise, établissant ainsi un point de consigne de couple, et
(iII) fournir du courant électrique au moteur dépendant sur ladite consigne de couple;
**caractérisé en ce que**
la limite de couple est basée sur un comportement de limite de couple sélectionné à partir d'une pluralité de comportements de plafonnement de couple différents, dans lesquels pour chaque comportement de couple de serrage: l'ampleur du couple de serrage varie en fonction de la vitesse du moteur, et la variation de l'amplitude du couple de serrage est prédéterminée telle que le courant tiré par le moteur est maintenu à un niveau seuil respectif, et
dans lequel le procédé comprend les étapes supplémentaires de:
recevoir une entrée d'un système de gestion de moteur, et sélectionner le comportement de couple maximal dans la pluralité de comportements de limitation du couple en fonction de l'entrée du système de gestion moteur

2. Procédé selon la revendication 1, comprenant l'étape de recevoir le comportement de limitation de couple sélectionné dans la pluralité des comportements de couple maximal.

3. Procédé selon la revendication 1 ou 2, dans lequel le comportement du capuchon de couple est sélectionné en fonction de la puissance disponible dans une source d'alimentation.

4. Procédé selon l'une quelconque des revendications précédentes, dans lequel le moteur est un moteur à réluctance commutée.

5. Procédé selon la revendication 4, dans lequel la valeur d'au moins une caractéristique de commande du courant électrique fourni au moteur est déterminée à partir d'un point de consigne de la carte de couple.

6. Procédé selon la revendication 5, dans lequel le au moins une caractéristique de commande du courant électrique est l'angle ON

7. Système de commande de compresseur électrique configuré pour contrôler un moteur dans un compresseur électrique lors du changement de la vitesse du moteur d'une vitesse réelle à une vitesse cible, le système comprenant:
un module de mémoire comportant un comportement de limitation de couple,
un processeur agencé pour appliquer le comportement de limitation de couple à un plafond de couple imposé sur le couple nécessaire pour changer la vitesse du moteur de la vitesse réelle vers la vitesse cible;
**caractérisé en ce que** le système de contrôle du compresseur électrique
comprend une bibliothèque contenant une pluralité de comportements différents de plafonds de couple, dans lesquels pour chaque comportement de plafond de couple:
l'amplitude du couple de serrage varie en fonction de la vitesse du moteur, et la variation de l'amplitude du couple maximal est prédéterminé de telle sorte que le courant consommé par le moteur est maintenu à un seuil respectif, et
dans lequel le système de commande est configuré pour sélectionner le comportement du capuchon de couple parmi la pluralité de comportements de capuchon de couple sur la base d'une entrée du système de gestion du moteur.

8. Compresseur électrique en combinaison avec le système de commande électrique du compresseur selon la revendication 7.
